# EUROPÄISCHE PATENTANMELDUNG

(11) **EP 0 907 235 A1**
(43) Veröffentlichungstag der Anmeldung: **07.04.1999**
(21) Anmeldenummer: 98117784.3
(22) Anmeldetag: 18.09.1998
(51) Int. Cl.: H02K 15/02

(54) **Verfahren zur Herstellung einer lamellierten elektrischen Maschine**

(30) Priorität: 01.10.1997 DE 19743549
(71) Anmelder: SIEMENS AKTIENGESELLSCHAFT, 80333 München (DE)
(72) Erfinder: Schier, Michael, Dipl.-Ing, 66424 Homburg (DE); Dietz, Armin, Dipl.-Ing., 97080 Würzburg (DE); Deutloff, Norbert, Dipl.-Ing.(FH), 97291 Thüngersheim (DE)

(57) **Zusammenfassung**

Die elektrische Maschine weist einen Rotor aus ringförmigen, über den Umfang geschlossenen Rotor-Blechlamellen (3) sowie zumindest einen Sektorstator aus teilringförmigen Stator-Blechlamellen (1;2) auf; zur Minderung des Stanzabfalls werden die Stator-Blechlamellen (1;2) jeweils aus dem Stanzabfall innerhalb der ringförmigen Rotor-Blechlamellen (3) gestanzt; zweckmäßigerweise fallen die Stanzkonturen der beim Stanzen in einem Blechband (9) bzw. einer Blechtafel benachbarten Lamellen (3;1 bzw.1;2) zumindest teilbereichsweise zusammen.

## Beschreibung

Die Erfindung bezieht sich auf ein Verfahren zur Herstellung einer lamellierten elektrischen Maschine, insbesondere eines nach dem Reluktanzprinzip arbeitenden statorerregten Motor-Generators; eine derartige elektrische Maschine ist z.B. durch die EP 0 103 821 B1 bekannt.

Bei bekannten, in Verbindung mit einer Kraftfahrzeug-Brennkraftmaschine vorgesehenen Motor-Generatoren bildet die der Kurbelwelle der Brennkraftmaschine zu- bzw. abkuppelbare Schwungmasse gleichzeitig den wicklungslosen, nach dem Reluktanzprinzip arbeitenden Rotor des Motorgenerators. Der radiale Rotorinnenraum ist als Bauraum für weitere mechanische Komponenten, insbesondere eine Kupplung zur Ankopplung des Schwungmassen-Rotors an die Kurbelwelle der Brennkraftmaschine, freizuhalten. Die ringförmige Rotorstruktur muß aus elektromagnetischen und festigkeitsbedingten Gründen aus in sich geschlossenen ringförmigen Blechlamellen zusammengesetzt sein.

Zur Statorerregung weisen derartige heteropolar erregte Mittelfrequenzmaschinen bzw. heteropolar statorerregte Synchronmaschinen mehrere am Statorumfang verteilte Erregerwicklungen auf; der Stator ist in vorteilhafter Weise in Sektorstator-Bauweise ausführbar, wobei die über den Umfang verteilten Sektorstatoren nicht untereiander mechanisch bzw. magnetisch verbunden sein müssen, sodaß die Zwischenräume für antriebsseitige mechanische Komponenten zur Verfügung stehen. Das mit Nuten zur Aufnahme einer Arbeitswicklung versehene Statorpaket ist ebenso wie der Rotor aus, vorzugsweise gestanzten, Blechlamellen zusammengesetzt.

Gemäß Aufgabe vorliegender Erfindung soll der fertigungs- und montagetechnische Aufwand zur Herstellung einer zuvor beschriebenen heteropolar erregten Mittelfrequenzmaschine bzw. einer zuvor beschriebenen heteropolar statorerregten Synchronmaschine bei voller Betriebstüchtigkeit des Antriebes wesentlich vermindert werden können. Die Lösung dieser Aufgabe gelingt durch ein Verfahren gemäß Patentanspruch 1; vorteilhafte Ausgestaltungen sind jeweils Gegenstand der Unteransprüche.

Durch das erfindungsgemäße Verfahren kann einerseits der durch Stanzabfall bedingte Materialverlust wesentlich verkleinert und andererseits durch gleichzeitiges Stanzen von für die verschiedenen Stator-Blechlamellen bzw. Rotor-Blechlamellen gemeinsamen Konturen die Stanzzeit sowie der Stanzwerkzeug-Verschleiß reduziert werden. Eine besonders optimale Materialausnutzung ist nach einer Ausgestaltung der Erfindung dadurch gegeben, daß für eine elektrische Maschine mit über den Umfang verteilten unterschiedlich großen Sektorstatoren je ringförmiger Rotorlamelle aus deren innerem Stanzabfall Stator-Blechlamellen erster Art mit größerer Jochhöhe und/oder größerer Zahl von Statorzähnen und Stator-Blechlamellen zweiter Art mit kleinerer Jochhöhe und/oder kleinerer Zahl von Statorzähnen ausgestanzt werden, wobei in ihrer gegenseitigen Plazierung in dem zu stanzenden Blechteil bei vorteilhaft zumindest teilweise gemeinsamer Stanzkontur die Stator-Blechlamellen erster Art radial außen zu den Stator-Blechlamellen zweiter Art innerhalb der ringförmigen Lamelle angeordnet und die Stator-Blechlamellen erster Art die Stator-Blechlamellen zweiter Art tangential übergreifen.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: eine axial stirnseitige Draufsicht auf ein ringförmiges Reluktanz-Rotorpaket mit vier über dessen Außenumfang verteilten, noch unbewickelten Sektorstator-Paketen;
- FIG 2: ein Blechband mit den Stanzkonturen für die eine Hälfte einer ringförmigen Rotor-Blechlamelle und für je eine elektromagnetisch erregbare Stator-Blechlamelle eines größeren und eines kleineren Sektorstators;
- FIG 3: ein Blechband mit den Stanzkonturen für die eine Hälfte einer ringförmigen Rotor-Blechlamelle und für je eine dauermagnetisch erregbare Stator-Blechlamelle eines größeren und eines kleineren Sektorstators;
- FIG 4: eine axial stirnseitige Draufsicht auf einen größeren Sektorstator mit einer Erregerwicklung;
- FIG 5: eine axial stirnseitige Draufsicht auf einen kleineren Sektorstator mit einer Erregerwicklung;
- FIG 6: eine axial stirnseitige Draufsicht auf einen kleineren Sektorstator mit einem Dauermagneten;
- FIG 7: eine ringförmige, aus Rotor-Blechlamellensektoren zusammengesetzte Rotor-Blechlamelle mit umfangsseitigen Reluktanz-Ausnehmungen;
- FIG 8: eine ringförmige, aus Rotor-Blechlamellensektoren zusammengesetzte Rotor-Blechlamelle ohne umfangsseitige Reluktanz-Ausnehmungen.

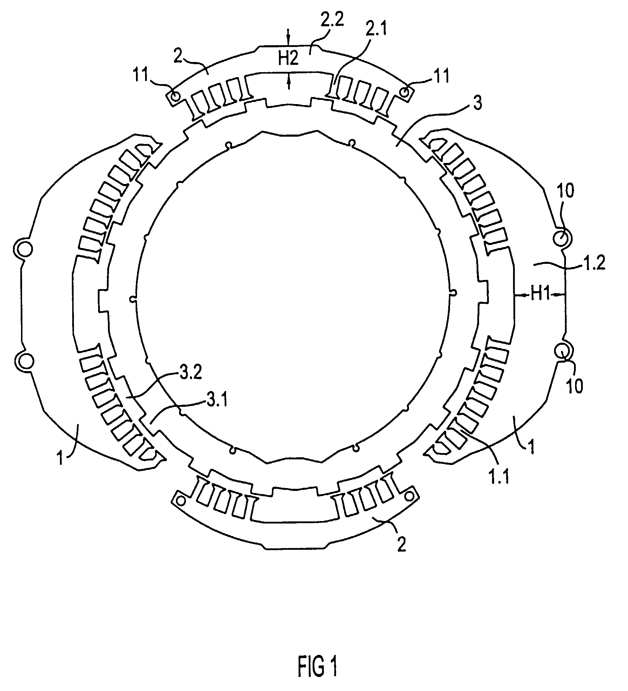

FIG 1 zeigt die axial stirnseitige Draufsicht auf einen nach dem Reluktanz-Prinzip arbeitenden statorerregten Motor-Generator mit einem ringförmig über den Umfang geschlossenen, aus axial hintereinander geschichteten Rotor-Blechlamellen 3 gebildeten Rotorpaket und mit vier über dessen Umfang im Luftspaltabstand verteilen, ebenfalls aus axial hintereinander geschichteten Stator-Blechlamellen 1 bzw.2 gebildeten Sektorstatoren. Der Bauraum im radial inneren Bereich der Rotor-Blechlamellen 3 ist insbesondere zur Aufnahme einer Kupplung vorgesehen, mittels derer der Rotor in bestimmten Betriebszuständen von der Kurbelwelle der Brennkraftmaschine trennbar ist.

Die über den Umfang magnetisch als auch kontruktiv voneinander unabhängigen Sektorstatoren sind im Ausführungsbeispiel gemäß FIG 1 unterteilt in solche mit Stator-Blechlamellen 1 erster Art mit einer größeren Jochhöhe H1 und/oder größeren Zahl von Statorzähnen 1.1 und in Stator-Blechlamellen 2 zweiter Art mit kleinerer Jochhöhe H2 und/oder kleiner Zahl von Statorzähnen 2.1. Die zwischen den Statorzähnen 1.1 bzw.2.2 verbleibenden Nuten dienen in an sich bekannter Weise zur Aufnahme einer hier wegen der deutlicheren Darstellung des Erfindungswesentlichen nicht eingezeichneten Arbeitswicklung.

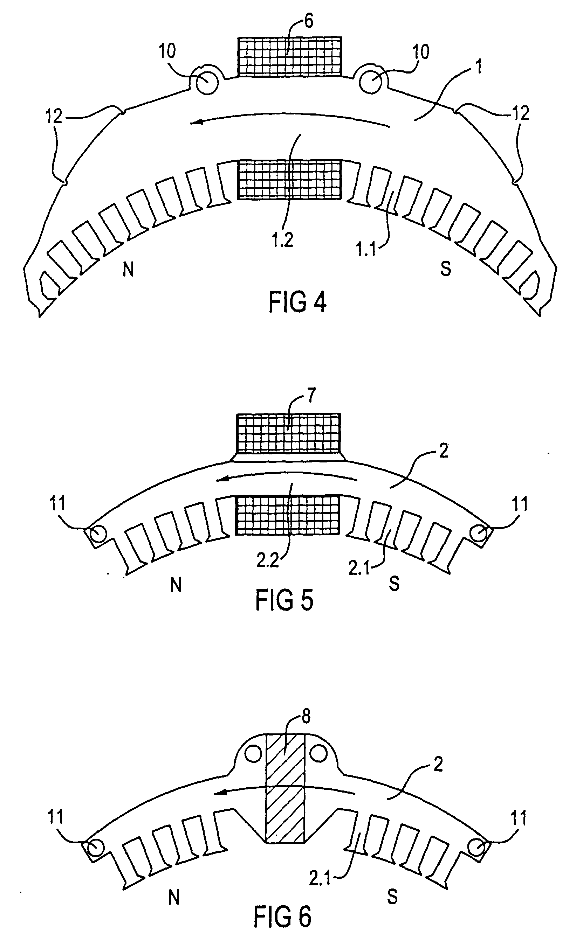

Für die statorseitige Erregung weist jede Stator-Blechlamelle 1 bzw.2 einen tangential mittigen Erreger-Aufnahmeteil 1.2;2.2;2.3 auf, der gemäß FIG 4,5 von einer Erregerwicklung 6 bzw.7 umwickelt wird, bzw. gemäß FIG 6 einen Dauermagneten 8 aufnimmt. Durch die Erregerwicklung 6 bzw.7 bzw. den Dauermagneten 8 wird in dem jeweiligen Sektorstator ein magnetischer Fluß in tangentialer Pfeilrichtung erzeugt, der anschließend radial über den Luftspalt und danach wieder tangential durch den Rotor verläuft; dadurch bilden die Statorzähne auf der einen tangentialen Seite der Erregerwicklung magnetische Nordpole und auf der anderen tangentialen Seite der Erregerwicklung magnetische Südpole. Die Drehmomentenbildung erfolgt nach dem an sich bekannten Reluktanzprinzip, wozu die Rotor-Blechlamellen 3 über den Umfang verteilt mit Reluktanz-Zähnen 3.1 versehen sind, die durch zwischenliegende ausgestanzte Reluktanz-Ausnehmungen 3.2 auf einfache Weise gebildet werden.

Gemäß einer Ausgestaltung der Erfindung sind die Stator-Blechlamellen 1 erster Art hinsichtlich Anzahl und Erstrekkung der Statorzähne 1.1 im Sinne einer vierfachen Polteilung und die Stator-Blechlamellen 2 zweiter Art im Sinne einer zweifachen Polteilung ausgebildet. Die hier gezeigte zweisträngige Maschine ist durch eine symmetrische Verteilung der Statorzähne auf beiden tangentialen Seiten des Erreger-Aufnahmeteils gekennzeichnet, wobei die Zahl der Statorzähne ein Vielfaches von vier beträgt.

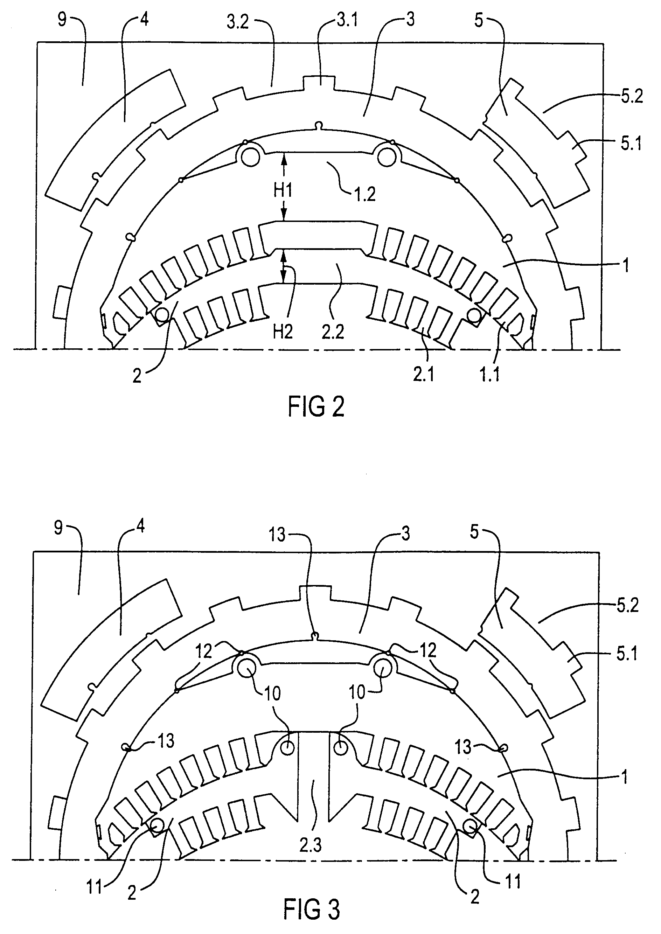

FIG 2,3 zeigen die erfindungsgemäß im Sinne einer optimalen Materialausnutzung vorteilhafte gegenseitige Ausbildung und Anordnung der in einem, gegebenenfalls mehrhubigen, Stanzvorgang aus einem Blechband 9 ausstanzbaren Stator-Blechlamellen 1;2 und Rotor-Blechlamellen 3 für einen Maschinenaufbau gemäß FIG 1. FIG 2 zeigt Stator-Blechlamellen 1;2 zur Aufnahme einer elektromagnetischen Erregung gemäß FIG 4,5. FIG 3 zeigt Stator-Blechlamellen 1;2 für eine permanentmagnetische Statorerregung durch einen Dauermagneten 8 gemäß FIG 6.

Wie aus FIG 2,3 ersichtlich, ist der an sich zum Stanzabfall zu zählende radiale Innenraum der geschlossenen ringförmigen Rotor-Blechlamelle 3 derart ausgenutzt, daß bei weitgehend gemeinsamen Stanzkonturen eine Stator-Blechlamelle 1 erster Art und eine Stator-Blechlamelle 2 zweiter Art innerhalb der oberen Hälfte der ringförmigen Rotor-Blechlamelle 3 und eine weitere Stator-Blechlamelle 1 erster Art sowie eine weitere Stator-Blechlamelle 2 zweiter Art in der unteren Hälfte der ringförmigen Rotor-Blechlamelle 3 ausstanzbar ist; derart sind für eine Blechlamellenschicht eines nach dem Reluktanzprinzip arbeitenden statorerregten Motor-Generators sämtliche Blechlamellen aus dem gleichen Blechtafelbereich unter optimaler Nutzung des Innenraums der ringförmigen Rotor-Blechlamelle 3 herstellbar. Zweckmäßigerweise ist für die diametral von dem Erreger-Aufnahmeteil wegweisenden Sektorstatorenden eine überproportionale Abnahme der radialen Sektorstatordicke vorgesehen.

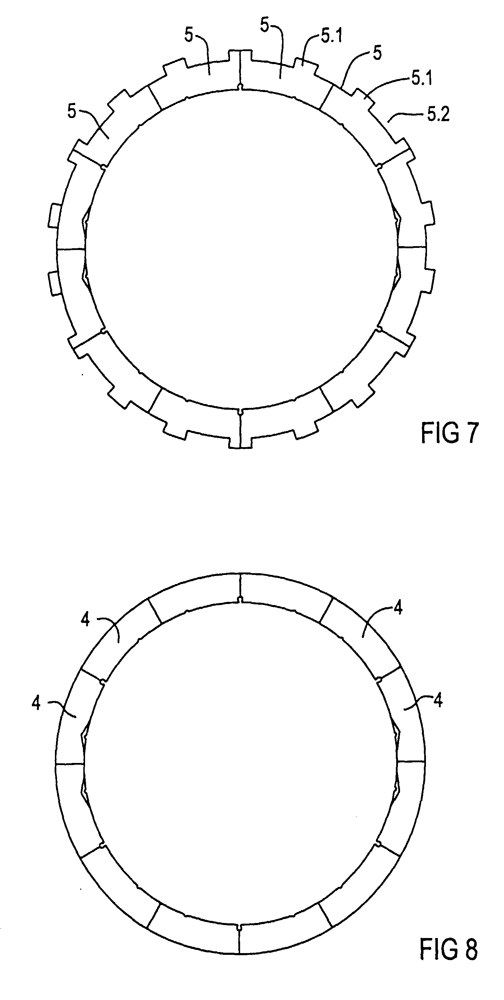

Gemäß einer für eine noch weitergehende Ausnutzung des Blechbandes vorteilhaften Ausgestaltung der Erfindung werden aus den Stanzabfall-Zwickeln radial oberhalb der Rotor-Blechlamelle 3 zusätzlich Rotor-Blechlamellensektoren 4,5 ausgestanzt, die gemäß FIG 7,8 zu geschlossenen Ringlamellen zusammensetzbar sind. Derartige gegenüber der Zahl der Stator-Blechlamellen zusätzliche Rotor-Blechlamellen werden vorzugsweise zur axialen Verlängerung des Rotor-Blechpaketes benutzt, wenn z.B. ein größeres Axialspiel des Rotors relativ zum Stator hingenommen werden muß und trotzdem die Drehmomentleistung nicht reduziert werden soll. In diesem Fall sind die Rotor-Blechlamellensektoren 5, wie aus FIG 5 ersichtlich, ebenfalls mit Reluktanz-Zähnen 5.1 versehen, die durch entsprechende zwischenliegende ausgestanzte Reluktanz-Ausnehmungen 5.2 gebildet werden.

Zur Vergößerung des Trägheitsmomentes des Schwungmassen-Rotors ist nach einer weiteren Ausgestaltung der Erfindung vorgesehen, die axiale Länge des Rotors insbesondere durch ringförmige Rotor-Blechlamellen zu vergrößern, die aus ungezahnten Rotor-Blechlamellensektoren 4 gemäß FIG 8 zusammengesetzt sind. Durch eine zusätzliche Verlängerung des Rotorpaketes durch die Rotor-Blechlamellensektoren 4;5 wird auch in vorteilhafter Weise die rotorseitige Feldverteilung verbessert für den Fall, daß die radiale Rotorpaketerstreckung - z.B. durch Einbauvorgaben in einem Kraftfahrzeug-Hybridantrieb - beschränkt ist. Zweckmäßigerweise ist für die ungezahnten Rotor-Blechlamellensektoren 4 im Unterschied zu den gezahnten Rotor-Blechlamellensektoren 5 - wie aus einem Vergleich in FIG 2,3 bzw. 7,8 ersichtlich - eine unterschiedliche tangentiale Erstreckung vorgesehen; dadurch ergibt sich eine gegenseitige tangentiale Überlappung beim Rotorzusammenbau.

Je nach Größe bzw. Kompliziertheit des Blechschnittes kann beim Stanzvorgang der in FIG 2,3 dargestellten einzelnen Rotor-Blechlamellen bzw. Stator-Blechlamellen ein gemeinsamer, jedoch mehrhubiger Stanzvorgang vorgesehen werden, bei dem z.B. zunächst die Nuten und anschließend in einem weiteren Hubvorschritts des Stanzwerkzeuges Freischnitte im Bereich von zwickelartig zusammenlaufenden Stanzkonturen und danach Trenn- bzw. Ausschnitte der einzelnen Stator- bzw. Rotor-Blechlamellen erfolgen. In FIG 2,3 bzw. FIG 4 sind solchen Freischnitten dienende gestanzte Freischneid-Löcher 12 angedeutet, die nach dem Ausstanzen und Schichten der Blechlamellen zu einem Rotorpaket bzw. einem Sektorstatorpaket in vorteilhafter Weise gegebenenfalls zur Aufnahme einer oberflächenbündigen Schweißnaht dienen können, mit der die Blechlamellen paketweise zusammengehalten werden; für einen alternativen bzw. gleichzeitigen Zusammenhalt sind Nietlöcher 13 ausgestanzt.

Freischneid-Löcher 12 bzw. Nietlöcher 13 sind zweckmäßigerweise jeweils tangential mittig unter den Reluktanzzähnen 3.1 angeordnet. Weitere eingestanzte Löcher dienen als Befestigungs-Öffnungen 10,11 zur Halterung der Sektorstatoren in ihrer motorseitigen Aufnahme; diese Befestigungs-Öffnungen 10,11 liegen vorzugsweise in gleichfelddurchflossenen Sektorzonen bzw. in magnetisch unbelasteten Sektorzonen.

### Bezugszeichenliste

- 1: Stator-Blechlamellen erster Art
- 1.1: Statorzähne
- 2: Stator-Blechlamellen zweiter Art
- 2.1: Statorzähne
- 2.2;2.3: Erreger-Aufnahmeteil
- 3: Rotor-Blechlamellen
- 3.1: Reluktanz-Zähne
- 3.2: Reluktanz-Ausnehmungen
- 4: Rotor-Blechlamellensektor
- 5: Rotor-Blechlamellensektor
- 5.1: Reluktanz-Zähne
- 5.2: Reluktanz-Ausnehmungen
- 6;7: Erregerwicklung
- 8: Dauermagnet
- 9: Blechband
- 10;11: Befestigungs-Öffnungen
- 12: Freischneid-Löcher
- 13: Nietlöcher
- H1;H2: Jochhöhe

## Patentansprüche

1. Verfahren zur Herstellung einer lamellierten elektrischen Maschine, insbesondere eines nach dem Reluktanz-Prinzip arbeitenden statorerregten Motor-Generators,
- mit rinförmigem, aus Rotor-Blechlamellen (3) geschichtetem Rotor, insbesondere Schwungmassen-Rotor;
- mit zumindest einem aus Stator-Blechlamellen (1;2) geschichteten Sektorstator;
- mit aus jeweils den gleichen Blechteilen, insbesondere einem Blechband (9) bzw. einer Blechtafel, gestanzten Rotor-Blechlamellen (3) und Stator-Blechlamellen (1;2);
- mit jeweils ringförmig gestanzten Rotor-Blechlamellen (3) und aus dem innerhalb der ringförmigen Rotor-Blechlamellen (3) verbleibenden Stanzabfall eines Blechteils, insbesondere eines Blechbandes (9), gestanzten Stator-Blechlamellen (1;2).

2. Verfahren zur Herstellung einer lamellierten elektrischen Maschine nach dem vorhergehenden Anspruch
- mit jeweils in einem gemeinsamen, insbesondere mehrhubigen, Stanzvorgang aus einem Blechteil, insbesondere einem Blechband (9) bzw. einer Blechtafel, gestanzten Rotor-Blechlamellen (3) und Stator-Blechlamellen (1;2).

3. Verfahren zur Herstellung einer lamellierten elektrischen Maschine, insbesondere mit vier über den Umfang verteilten Sektorstatoren, nach zumindest einem der vorhergehenden Ansprüche
- mit je ringförmiger Rotorlamelle (3) aus deren innerem Stanzabfall gestanzten, insbesondere zwei, Stator-Blechlamellen (1) erster Art mit größerer Jochhöhe (H1) und/ oder größerer Zahl von Statorzähnen (1.1) und zwei Stator-Blechlamellen (2) zweiter Art mit kleinerer Jochhöhe (H2) und/oder kleinerer Zahl von Statorzähnen (2.1).

4. Verfahren zur Herstellung einer lamellierten elektrischen Maschine nach zumindest einem der vorhergehenden Ansprüche
- mit Stator-Blechlamellen (1;2) mit jeweils einem tangential mittigen Erreger-Aufnahmeteil (1.2;2.2;2.3) und jeweils tangential beidseitigen Statorzahnteilen mit jeweils je Sektorstator tangential beidseitig gleicher Zahl von Statorzähnen (1.1;2.1).

5. Verfahren zur Herstellung einer lamellierten elektrischen Maschine nach den vorhergehenden Ansprüchen 3 und/oder 4
- mit Stator-Blechlamellen (1) erster Art mit größerer Jochhöhe (H1) und/oder Zahl von Statorzähnen (1.1) im Sinne einer vierfachen Polteilung;
- mit Stator-Blechlamellen (2) zweiter Art mit geringerer Jochhöhe (H2) und/oder Zahl von Statorzähnen (2.1) im Sinne einer zweifachen Polteilung.

6. Verfahren zur Herstellung einer lamellierten elektrischen Maschine nach zumindest einem der vorhergehenden Ansprüche
- mit im Sinne zumindest über Teilbereiche gemeinsamer Stanz-Trennschnitte der in dem Blechteil angeordneten Stator-Blechlamellen (1;2) bzw. Rotor-Blechlamellen (3).

7. Verfahren zur Herstellung einer lamellierten elektrischen Maschine nach zumindest einem der vorhergehenden Ansprüche
- mit aus dem Stanzabfall radial außerhalb der ringförmigen Rotor-Blechlamellen (3) ausgestanzten teilringförmigen Rotor-Blechlamellensektoren (4 bzw.5), die im Sinne einer axial endseitigen Verlängerung des Rotor-Blechpakets vollringförmig zusammenfügbar sind.

8. Verfahren zur Herstellung einer lamellierten elektrischen Maschine nach dem vorhergehenden Anspruch
- mit gleich den übrigen Rotor-Blechlamellen (3) mit Reluktanz-Ausnehmungen (5.2) bzw. Reluktanz-Zähnen 5.1 versehenen Rotor-Blechlamellensektoren (5).

9. Verfahren zur Herstellung einer lamellierten elektrischen Maschine nach dem vorhergehenden Anspruch 7
- mit ungleich den übrigen Rotor-Blechlamellen (3) von Reluktanz-Ausnehmungen (5.2) bzw. Reluktanz-Zähnen 5.1 freien Rotor-Blechlamellensektoren (4).

10. Verfahren zur Herstellung einer lamellierten elektrischen Maschine nach zumindest einem der vorhergehenden Ansprüche mit folgendem Ablauf von Verfahrensschritten
- aus einem Blechteil, insbesondere einem rechteckigen Blechband (9), werden fortlaufend, insbesondere in einem u.U. mehrhubigen Stanzvorgang, ringförmige Rotor-Blechlamellen (3) und zumindest im Bereich ihres ringinneren Stanzabfalls Stator-Blechlamellen (1;2) ausgestanzt;
- die Rotor-Blechlamellen (3) werden zu Blechpaketen eines Reluktanzläufers geschichtet und zusammengefaßt;
- die Stator-Blechlamellen (1;2) werden zu Sektorstatoren geschichtet und zusammengefaßt und mit einer Statorerregung (6;7;8) versehen.
